# EUROPEAN PATENT APPLICATION

(11) **EP 1 162 246 A1**
(43) Date of publication of application: **12.12.2001**
(21) Application number: 00950020.8
(22) Date of filing: 04.08.2000
(51) Int. Cl.: C09D 201/00, C09D 4/02, B32B 27/36, C08J 7/04

(54) **COATING COMPOSITION FOR HARD-COAT FORMATION ON POLYCARBONATE SUBSTRATE, POLYCARBONATE FILM WITH HARD COAT LAYER, AND POLYCARBONATE MOLDING WITH HARD COAT LAYER**

(30) Priority: 10.08.1999 JP 22596799
(71) Applicant: TDK Corporation, Chuo-ku, Tokyo 103-8272 (JP)
(72) Inventor: YAMADA, Chieko, Tokyo 103-8272 (JP); TAMAI, Kiminori, Tokyo 103-8272 (JP)
(74) Representative: Wilhelms, Rolf E., Dr.
(86) International application number: JP0005278
(87) International publication number: WO0112738

(57) **Abstract**

A hard-coating material composition for a polycarbonate substrate is provided, which composition is excellent in surface hardness and scuff resistance and is also excellent in adhesive properties to the substrate.

The hard-coating material composition comprises a hard-coating material and an organic solvent. The organic solvent comprises 70 wt% or more of a solvent (S) that corrodes the polycarbonate at 25°C in the total organic solvent, and the solvent (S) comprises from 10 to 50 wt% of a high boiling point solvent having a boiling point of 100°C or more and from 50 to 90 wt% of a low boiling point solvent having a boiling point of 80°C or less with respect to the solvent (S). The high boiling point solvent is preferably toluene, and the low boiling point solvent is preferably ethyl acetate and/or methyl ethyl ketone.

The hard-coating material is preferably an ultraviolet-curable acrylic type hard-coating material. A polycarbonate film with a hard-coating layer and a polycarbonate molded article with a hard-coating layer.

## Description

### TECHNICAL FIELD

The present invention relates to a hard-coating material composition for a polycarbonate substrate which composition is excellent in the hardness of a hard-coating layer and adhesive properties with the polycarbonate substrate. In particular, the present invention relates to a hard-coating material composition being suitable for forming continuously a hard-coating layer on a polycarbonate film. Further, the present invention relates also to a method of producing a polycarbonate film with a hard-coating layer with the use of this hard-coating material composition, and to the obtained polycarbonate film with the hard-coating layer. Further, the present invention relates to a polycarbonate molded article with a hard-coating layer produced by injection molding with the use of this polycarbonate film with the hard-coating layer.

### BACKGROUND ART

Polycarbonate is widely studied for various industrial materials, architectural materials, ornamental materials, optical materials, and home materials as a material to be substituted for glass because of being excellent in transparency, being lightweight, and having a good impact resistance. However, compared with glass, polycarbonate has a drawback of having a low surface hardness and being inferior in scuff resistance. Therefore, surface hardness is raised by giving a hard-coating layer to the surface of the polycarbonate.

For example, Japanese Laid-open Patent Publication No. 06-100799 (1994) discloses forming of a hard-coating layer by applying an ultraviolet-curable acrylic type hard-coating material on a polycarbonate plate, followed by curing. Also, Japanese Laid-open Patent Publication No. 09-48934 (1997) discloses forming of a hard-coating layer by applying an ultraviolet-curable acrylic type hard-coating material on a polyester film as a plastic film, followed by curing.

However, by the arts disclosed in these publications, it is difficult to obtain a hard-coating layer having high adhesive properties to a polycarbonate substrate and having a high surface hardness and scuff resistance.

Generally, hard-coating materials have poor adhesive properties to polycarbonate and, if the hardness of the hard-coating material is raised, the adhesive properties tend to become poorer. For this reason, it is difficult to raise both properties of hardness and adhesive properties by studying the composition of the hard-coating materials alone.

Also, Japanese Laid-open Patent Publication No. 10-7939 (1998) discloses an photo-curable type antistatic coating material composition, and discloses use of a mixed solvent containing from 0.1 to 10 wt% of an organic solvent that dissolves polycarbonate as a solvent in order to obtain an antistatic coating film having good adhesive properties to any of an acryl plate, a polyvinyl chloride plate, and a polycarbonate plate.

In the meantime, as a method for forming a hard-coating layer, there are a sheet-to-sheet method that forms a hard-coating layer for each polycarbonate film sheet, and a continuous method that forms a hard-coating layer continuously on a long polycarbonate film and winds the hard-coating layer in a roll form.

In the case of forming a hard-coating layer by the sheet-to-sheet method, there are dip coating, spin coating, spray methods, and others as an applying method. By these methods, problems occur such as turbidity caused by swelling of polycarbonate and poor curing of the hard-coating material caused by insufficient solvent drying if one makes use of a solvent that dissolves polycarbonate because of a long period of time in which the polycarbonate is in contact with the hard-coating material in a solution state from the application till drying of the hard-coating material. Therefore, a solvent that does not dissolve polycarbonate is normally used or a non-solvent type hard-coating material is mainly used.

Also, the sheet-to-sheet method has a poor productivity because of lack in continuity, and the thickness of the polycarbonate film is required to be 500 µm or more from the viewpoint of workability, so that it is disadvantageous in view of costs.

On the other hand, in the continuous method, improvements in the productivity and the cost-down effects by reduction in the thickness of the polycarbonate film can be expected. Further, since the hard-coating layer is formed continuously, the period of time in which the polycarbonate film is in contact with the hard-coating material in a solution state is short, and a solvent that dissolves the polycarbonate can be used as a diluting solvent for a hard-coating material.

### DISCLOSURE OF THE INVENTION

### OBJECTS OF THE INVENTION

Thus, an object of the present invention is to solve the aforesaid drawbacks of the prior art and to provide a hard-coating material composition for a polycarbonate substrate which composition is excellent in surface hardness and scuff resistance and is also excellent in adhesive properties to the substrate. In particular, an object of the present invention is to provide a hard-coating material composition which is suitable for forming continuously a hard-coating layer on a polycarbonate film.

Further, an object of the present invention is also to provide a method for producing a polycarbonate film with a hard-coating layer with the use of this hard-coating material composition, as well as a polycarbonate film with a hard-coating layer.

Further, an object of the present invention is also to provide a polycarbonate molded article with a hard-coating layer by injection molding with the use of this polycarbonate film with a hard-coating layer.

### SUMMARY OF THE INVENTION

As a result of eager studies, the present inventors found out that the adhesive properties are improved by using a solvent having a specific composition that corrodes polycarbonate and roughening the interface between a polycarbonate substrate and a hard-coating material to some extent with the solvent, thereby completing the present invention.

Namely, the present invention is a hard-coating material composition for a polycarbonate substrate which composition comprises a hard-coating material and an organic solvent, wherein the organic solvent comprises 70 wt% or more of a solvent (S) that corrodes the polycarbonate at 25°C in the total organic solvent, and the solvent (S) that corrodes the polycarbonate comprises from 10 to 50 wt% of a high boiling point solvent having a boiling point of 100°C or more and from 50 to 90 wt% of a low boiling point solvent having a boiling point of 80°C or less with respect to the solvent (S).

In the present invention, the boiling point of the high boiling point solvent is preferably 100°C or more and 130°C or less.

In the present invention, the high boiling point solvent is, for example, toluene, and the low boiling point solvent is, for example, ethyl acetate and/or methyl ethyl ketone.

In the present invention, the hard-coating material is preferably an ultraviolet-curable acrylic type radical-polymerizing hard-coating material.

The polycarbonate substrate to which the hard-coating material composition of the present invention is to be applied is, for example, a polycarbonate film, and is preferably a polycarbonate film having a thickness of from 100 µm to 500 µm.

The hard-coating material composition of the present invention is particularly preferably applied in forming continuously a hard-coating layer on a long polycarbonate film.

The present invention is also a method for producing a polycarbonate film with a hard-coating layer, the method comprising the steps of applying continuously the hard-coating material composition on a long polycarbonate film, drying within a temperature range of from 50 to 120°C for 10 seconds to five minutes, thereafter irradiating ultraviolet rays for curing to form the hard-coating layer, and winding the obtained film in a roll form.

Further, the present invention is a method for producing a polycarbonate film with a hard-coating layer, the method comprising the step of applying continuously the hard-coating material composition on a long polycarbonate film by means of a slit die coater.

The present invention also relates to a polycarbonate film with a hard-coating layer which polycarbonate film is produced with the use of the aforesaid hard-coating material composition.

Namely, the present invention is a polycarbonate film with a hard-coating layer, the polycarbonate film having the hard-coating layer on at least one surface thereof, wherein the hard-coating layer contains a solvent (S) that corrodes the polycarbonate at 25°C, and the content of the solvent is within a range from 0.3 to 60 µg/0.015 cm³ in the hard-coating layer. Here, the hard-coating layer contains a high boiling point solvent having a boiling point of 100°C or more within a range from 0.2 to 50 µg/0.015 cm³ and a low boiling point solvent having a boiling point of 80°C or less within a range from 0.1 to 30 µg/0.015 cm³ as the solvent (S). The solvent (S) contained in the hard-coating layer is derived from the solvent (S) used at the time of forming the hard-coating layer.

The present invention is a polycarbonate film with a hard-coating layer, the polycarbonate film having the hard-coating layer on at least one surface thereof, wherein a denatured layer comprising the polycarbonate denatured by a solvent (S) which is used at the time of forming the hard-coating layer and which corrodes the polycarbonate at 25°C, is formed in a surface layer portion of the polycarbonate film on the side that is in contact with the hard-coating layer. The surface layer portion of the polycarbonate film is corroded by the solvent (S) to be denatured or swollen and, as a result, the adhesive properties to the hard-coating layer are improved.

Further, the present invention also relates to a polycarbonate molded article with a hard-coating layer, which polycarbonate molded article is produced by injection molding with the use of the aforethe polycarbonate film with the hard-coating layer.

Namely, the present invention is a polycarbonate molded article with a hard-coating layer, the polycarbonate molded article having the hard-coating layer on at least one surface of the molded article, wherein the hard-coating layer contains a solvent (S) that corrodes the polycarbonate at 25°C, and the content of the solvent is within a range from 0.1 to 35 µg/0.015 cm³ in the hard-coating layer. Here, the hard-coating layer contains a high boiling point solvent having a boiling point of 100°C or more within a range from 0.06 to 25 µg/0.015 cm³ and a low boiling point solvent having a boiling point of 80°C or less within a range from 0.03 to 20 µg/0.015 cm³ as the solvent (S).

The present invention is a polycarbonate molded article with a hard-coating layer, the polycarbonate molded article having the hard-coating layer on at least one surface of the molded article, wherein a denatured layer comprising the polycarbonate denatured by a solvent (S) which is used at the time of forming the hard-coating layer and which corrodes the polycarbonate at 25°C, is formed in a surface layer portion of the polycarbonate on the side that is in contact with the hard-coating layer.

### BRIEF DESCRIPTION OF THE DRAWINGS

Fig. 1 is a cross-sectional view of one example of a polycarbonate film with a hard-coating layer of the present invention.
Fig. 2 is a view for describing usage of the polycarbonate film with a hard-coating layer of the present invention and is a cross-sectional view illustrating a state in which a mold for injection molding is clamped.
Fig. 3 is a cross-sectional view illustrating a layer constitution of a molded article obtained by the injection molding of Fig. 2 to which a hard-coating layer is given.
Fig. 4 is a view for describing usage of the polycarbonate film with a hard-coating layer of the present invention and is a cross-sectional view illustrating a state in which a mold for injection molding is clamped.
Fig. 5 is a cross-sectional view illustrating a layer constitution of a molded article obtained by the injection molding of Fig. 4 to which a hard-coating layer is given on both surfaces.
Fig. 6 is an electron microscope photograph of a cross section of a polycarbonate film with a hard-coating layer of the present invention.

### MODES FOR CARRYING OUT THE INVENTION

As the hard-coating material, there are thermosetting type hard-coating materials such as silicone type and melamine type; however, ultraviolet-curable type hard-coating materials are preferable in view of productivity such as curing reactivity.

Radical-polymerizing hard-coating materials such as unsaturated polyester resin type and acrylic type, and cation-polymerizing hard-coating materials such as epoxy type and vinyl ether type can be used as the ultraviolet-curable type hard-coating material. In view of curing reactivity and surface hardness, acrylic type radical-polymerizing hard-coating materials are preferable.

The acrylic type radical-polymerizing hard-coating material comprises multi-functional (meth)acrylate having two or more (meth)acryloyl groups in a molecule and a photopolymerization initiator as main constituents.

As the multi-functional (meth)acrylate, for example, bifunctional (meth)acrylates such as 1,6-hexane di(meth)acrylate, (poly)ethylene glycol di(meth)acrylate, (poly)propylene glycol di(meth)acrylate, and neopentyl glycol di(meth)acrylate, trifunctional (meth)acrylates such as pentaerythritol tri(meth)acrylate, trimethylolpropane tri(meth)acrylate, glycerol tri(meth)acrylate, and tris-(2-hydroxyethyl)-isocyanuric acid ester (meth)acrylate, and (tetra or more)-functional (meth)acrylates such as pentaerythritol tetra(meth)acrylate and dipentaerythritol hexa(meth)acrylate may be mentioned.

Further, as the multi-functional (meth)acrylate, epoxy (meth)acrylates obtained by allowing a compound having two or more epoxy groups in a molecule to react with (meth) acrylic acid, polyester acrylates obtained by allowing polyhydric alcohol, polyvalent carboxylic acid and/or anhydride thereof, and (meth)acrylic acid to react for esterification, and urethane acrylates obtained by allowing polyhydric alcohol, polyvalent isocyanate, and hydroxyl group-containing acrylate to react, and others may be mentioned.

Among these, for example, pentaerythritol tri(meth)acrylate, dipentaerythritol hexa(meth)acrylate, and others are preferable in view of obtaining a high hardness.

Among these, one kind may be used alone, or two or more kinds may be used in combination. The amount of the aforesaid multi-functional (meth)acrylate to be used is about 20 to 80 wt% (as converted to solid components) in the hard-coating material.

Also, besides the aforesaid multi-functional (meth)acrylate, a photopolymerizing oligomer or polymer can be used. For example, it is an oligomer or polymer having a (meth)acryloyl group at its terminal end and having a weight-average molecular weight Mw of, for example, about 2000 to 50000. As the oligomer or polymer part, for example, those formed from styrene polymer, styrene/acrylonitrile copolymer, styrene/(meth)acrylate copolymer, (meth)acrylate polymer, butadiene polymer, or silicone polymer, and others may be mentioned. As the photopolymerizing oligomer or polymer, for example, polystyryl methacrylate, polybutadiene athacrylate, and others may be mentioned.

As the photopolymerization initiator, various known ones can be used. For example, one may select from ketones (acetophenone, propiophenone, anthraquinone, thioxanthone, benzophenone, or derivatives thereof), benzoic acid esters (for example, methyl p-dimethylaminobenzoate), benzoin ethers or derivatives thereof (for example, benzoin methyl ether, benzoin ethyl ether), acylphosphine oxides, and others. Needless to say, photopolymerization initiators other than these may be used as well.

The amount of the photopolymerizing initiator to be used can be selected, for example, from a range of about 0.1 to 20 parts by weight, preferably about 1 to 10 parts by weight with respect to 100 parts by weight of the aforesaid multi-functional (meth)acrylate (A).

Next, the organic solvent that dilutes the aforesaid hard-coating material will be described. This organic solvent comprises 70 wt% or more of a solvent (S) that corrodes the aforesaid polycarbonate at 25°C in the total organic solvent.

Here, the judgement of whether the solvent corrodes polycarbonate at 25°C or not is carried out by dropping one drop of the solvent on a polycarbonate film on which the hard-coating layer is to be formed in an atmosphere of 25°C, leaving it to stand for 30 seconds, thereafter wiping the solvent away with a dried cloth, and observing the appearance of the polycarbonate film surface by eyes.

In other words, the solvent (S) that corrodes polycarbonate at 25°C is a solvent such that the polycarbonate film surface becomes turbid in the case where one drop of the solvent is dropped on a polycarbonate film on which the hard-coating layer is to be formed in an atmosphere of 25°C, and the solvent is wiped away after being left to stand for 30 seconds. A solvent that does not leave a turbid polycarbonate film surface but leaves stains on the surface has a smaller degree of corroding the polycarbonate. A solvent that does not leave a turbid polycarbonate film surface and does not leave stains has little degree of corroding the polycarbonate. In the present invention, the solvent that leaves a turbid polycarbonate film surface under the aforesaid condition is referred to as the solvent (S) that corrodes polycarbonate. A solvent having a higher solubility of polycarbonate has a larger degree of corroding polycarbonate.

The solvent (S) that corrodes polycarbonate at 25°C is not particularly limited and, for example, ethyl acetate (bp.: 77"C), methyl ethyl ketone (MEK, bp.: 79.6°C), toluene (bp.: 110°C). and others may be mentioned.

In the present invention, the aforesaid solvent (S) is contained in an amount of 70 wt% or more, preferably 80 wt% or more, more preferably 90 wt% or more in the total organic solvent. By allowing the content to be 70 wt% or more, the polycarbonate surface is corroded, and the adhesive properties between the polycarbonate and the hard-coating layer is improved. With the content of less than 70 wt%, the corrosion of the polycarbonate surface is insufficient, and it lacks adhesive properties.

As a diluting organic solvent of the hard-coating material other than the aforesaid solvent (S), those that dissolve the material constituting the hard-coating material can be used without limitation. For example, alcohols such as ethyl alcohol, n-propyl alcohol, isopropyl alcohol, and n-butyl alcohol, methyl isobutyl ketone, cyclohexanone, 2-methoxyethanol, 2-ethoxyethanol, ethylene glycol dimethyl ether, ethylene glycol diethyl ether, diethylene glycol dimethyl ether, xylene, methyl cellosolve, ethyl cellosolve, and others may be mentioned.

The solvent (S) that corrodes the polycarbonate comprises from 10 to 50 wt% of a high boiling point solvent having a boiling point of 100°C or more and from 50 to 90 wt% of a low boiling point solvent having a boiling point of 80°C or less with respect to the solvent (S).

By using the aforesaid high boiling point solvent within a range of from 10 to 50 wt% as the solvent (S), the polycarbonate surface is corroded to provide a good adhesive properties between the polycarbonate and the hard-coating layer at the time of drying after the hard-coating material composition is applied. Also, in order to have a balance between the hardness of the hard-coating layer and the adhesive properties, the aforesaid low boiling point solvent is used within a range from 50 to 90 wt% in combination as the solvent (S).

If the high boiling point solvent is used in an amount exceeding 50 wt%, the solvent will remain in a large amount after drying to provide an inferior surface hardness of the hard-coating, although a good adhesive properties is obtained. On the other hand, if the aforesaid low boiling point solvent is used in an amount exceeding 90 wt%, the solvent will dry too soon, and will dry without suitable corrosion of the polycarbonate surface, thereby providing an inferior adhesive properties to the polycarbonate. Therefore, in the present invention, the solvent (S) having the aforesaid specific composition is used. Also, the boiling point of the high boiling point solvent is preferably 130°C or less. If the boiling point is too high, the solvent tends to remain in a large amount after drying.

In the present invention, the high boiling point solvent is toluene, and the low boiling point solvent is ethyl acetate and/or methyl ethyl ketone as a preferable mode, although not particularly limited. Here, the corrosion degree of the polycarbonate by several kinds of organic solvents is shown in Table 1.

**Table 1:**

| Corrosion degree of polycarbonate | | |
|---|---|---|
| Solvent | Boiling point (°C) | Degree of corrosion |
| ethyl acetate | 77 | ○ |
| methyl ethyl ketone | 79.6 | ○ |
| isopropyl alcohol (IPA) | 82.4 | × |
| toluene | 110 | ○ |
| cyclohexanone | 156 | Δ |
| ○: film surface becomes turbid when the solvent is wiped away after being left to stand. | | |
| Δ: film surface does not become turbid but stains are left when the solvent is wiped away after being left to stand. | | |
| ×: film surface does not become turbid and no stains are left when the solvent is wiped away after being left to stand. | | |

The blending ratio of the ultraviolet-curable type hard-coating material and the organic solvent in the hard-coating material composition is normally about 20 to 80 wt% of the ultraviolet-curable type hard-coating material and about 20 to 80 wt% of the organic solvent with respect to the total composition. It may be determined so that a good dispersibility or solubility and a suitable viscosity of the hard-coating material will be obtained.

Also, various known additives such as an ultraviolet absorbent, an ultraviolet stabilizer, an antioxidant, and a thermal polymerization prohibitor may be contained in the hard-coating material composition in accordance with the needs.

The hard-coating material composition can be obtained by dispersing or dissolving the hard-coating material components such as the multi-functional (meth)acrylate and the photopolymerization initiator into the aforesaid specific organic solvent by an ordinary method.

The hard-coating material composition of the present invention is suitable for the method of forming continuously a hard-coating layer on a long polycarbonate film and thereafter winding in a roll form.

First, the hard-coating material composition is applied continuously onto a polycarbonate film by a known method such as a roll coater such as gravure cylinder, reverse, or meyer bar, or a slit die coater.

After application, a drying process is carried out within a temperature range of from 50 to 120°C, preferably within a temperature range of from 55 to 90°C, for 10 seconds to 5 minutes, preferably from 30 seconds to 2 minutes. Under such a drying condition, the high boiling point solvent of the solvent (S) will remain until a latter stage of drying to suitably corrode the polycarbonate surface but remains little after drying. Therefore, compatibility between the surface hardness and the adhesive properties can be obtained.

After drying, ultraviolet rays are irradiated for curing. The ultraviolet rays may be irradiated by irradiating ultraviolet rays for about 200 to 2000 mJ/cm² with the use of a lamp such as a xenon lamp, a low pressure mercury-vapor lamp, a middle pressure mercury-vapor lamp, a high pressure mercury-vapor lamp, a super high pressure mercury-vapor lamp, a metal halide lamp, a carbon arc lamp, or a tungsten lamp. After curing, the film having the hard-coating layer formed thereon is wound in a roll form.

The thickness of the hard-coating layer may be about 0.5 µm to 20 µm, preferably about 2 µm to 5 µm after curing, though it depends on the purpose for use of the polycarbonate film.

As the polycarbonate film, those having a thickness of 100 µm to 500 µm are preferable, and those having a thickness of about 200 µm to 500 µm are more preferable. A film having a thickness of less than 100 µm provides poor workability in the case of performing a process such as molding after the hard-coating layer is formed, whereas a film having a thickness of more than 500 µm makes it difficult to wind in a roll form.

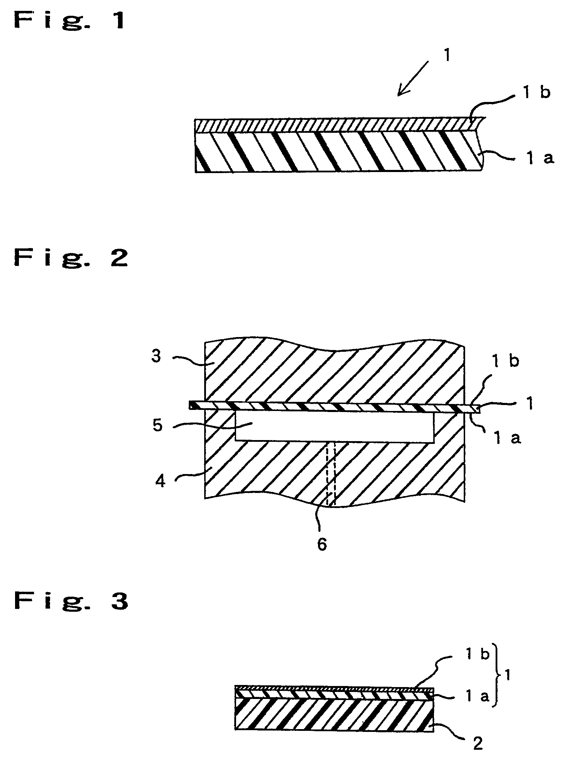

Thus, a polycarbonate film (1) with a hard-coating layer of the present invention is obtained having a hard-coating layer (1b) on one surface of the polycarbonate film (1a) (Fig. 1).

Since a solvent (S) having a specific composition is used, the obtained polycarbonate film with a hard-coating layer of the present invention normally contains a slight amount of residual solvent (S). The content of the solvent (S) is within a range from 0.3 to 60 µg/0.015 cm³ in the hard-coating layer. In the solvent (S), a high boiling point solvent having a boiling point of 100°C or more is contained within a range from 0.2 to 50 µg/0.015 cm³ and a low boiling point solvent having a boiling point of 80°C or less is contained within a range from 0.1 to 30 µg/0.015 cm³. The content of these residual solvents is preferably as little as possible.

In the obtained polycarbonate film with a hard-coating layer of the present invention, a denatured layer seemed to be denatured or swollen due to corrosion of the polycarbonate by the solvent (S) used at the time of forming the hard-coating layer, is formed in a surface layer portion of the polycarbonate film on the side that is in contact with the hard-coating layer. The thickness of the denatured layer is, for example, about 0.2 to 2 µm, although it depends on the composition of the solvent (S) that has been put to use and on the hard-coating layer forming operation. If the thickness of the denatured layer is too large, there is a possibility that the transparency of the film is adversely affected. On the other hand, if the thickness of the denatured layer is small, there is a possibility that the adhesive properties to the hard-coating layer are insufficient, though it is desirable in view of transparency.

Next, with reference to Figs. 2, 3, 4, and 5, a method of producing a polycarbonate molded article with a hard-coating layer by injection molding with the use of a polycarbonate film with a hard-coating layer of the present invention will be described.

Fig. 2 is a cross-sectional view illustrating a state in which a mold for injection molding is clamped, and Fig. 3 is a cross-sectional view illustrating a layer constitution of a molded article obtained by the injection molding of Fig. 2 to which the hard-coating layer is given.

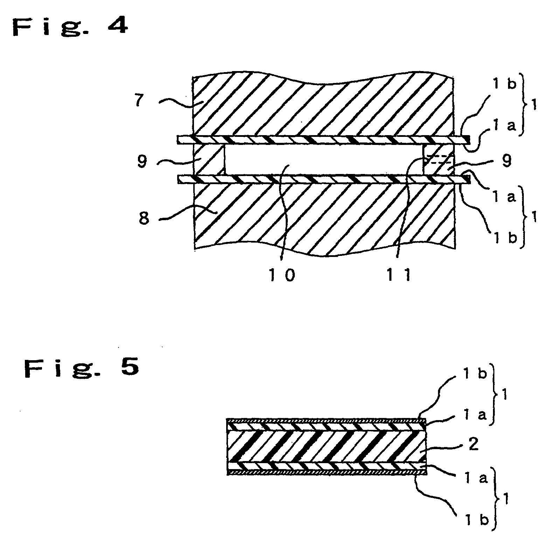

Fig. 4 is a cross-sectional view illustrating a state in which a mold for injection molding is clamped, and Fig. 5 is a cross-sectional view illustrating a layer constitution of a molded article obtained by the injection molding of Fig. 4 to which a hard-coating layer is given on both surfaces.

Referring to Fig. 2, a polycarbonate film (1) with a hard-coating layer of the present invention is set so that the hard-coating layer (1b) faces towards a movable mold (3) of the mold for injection molding, and is clamped so that a cavity (5) is formed between surface of the film base (1a) and the surface of a fixed mold (4). Thereafter, a molten polycarbonate resin is injected into the cavity (5) from a gate (6) and cooled by an ordinary method.

As illustrated in Fig. 3, this operation molds a molded article body (2) and, at the same time, laminates and integrates the polycarbonate film (1) on the surface of the molded article body (2) to obtain a molded article to which the hard-coating Layer (1b) is given. By the heat at the time of injection molding, the surface of the base film (1a) on the cavity (5) side is melted to be fused with the injected molten resin, whereby the film (1) is firmly integrated with the molded article body (2). After molding, the two molds (3) and (4) are opened to take the molded article out, and a required part is trimmed to obtain a completed article. This molding method can be applied as long as the molten resin to be injected is a resin that is easily compatible with the polycarbonate film, besides polycarbonate.

Fig. 4 shows a case of producing a molded article to which a hard-coating layer is given on both surfaces, and two sheets of the polycarbonate film with the hard-coating layer of the present invention are used.

Referring to Fig. 4, polycarbonate films (1) (1) with a hard-coating layer are sandwiched and set surrounding by a movable mold (7), a fixed mold (8) and a slide mold (9) so that the hard-coating layers (1b) (1b) face respectively towards a movable mold (7) and a fixed mold (8) surface of the mold for injection molding, and are clamped so that a cavity (10) is formed between the surfaces of the film base (1a) (1a). Thereafter, a molten resin is injected into the cavity (10) from a gate (11) and cooled by an ordinary method.

As illustrated in Fig. 5, this operation molds a molded article body (2) and, at the same time, laminates and integrates the polycarbonate films (1) (1) on both surfaces of the molded article body (2) to obtain a molded article to which the hard-coating layer (1b) (1b) are given on both surfaces. After molding, the molds (7) (8) and (9) are opened to take the molded article out, and a required part is trimmed to obtain a completed article.

Thus, a molded article to which the hard-coating layers are given on both surfaces can be obtained. This method is suitable for production of a plate-shaped injection-molded article, for example, a plastic article as a substitution for window glass of an automobile.

The obtained polycarbonate molded article with a hard-coating layer of the present invention normally contains a slight amount of residual solvent (S), since a polycarbonate film with a hard-coating layer is used. The content of the solvent (S) is within a range from 0.1 to 35 µg/0.015 cm³ in the hard-coating layer. In the solvent (S), a high boiling point solvent having a boiling point of 100°C or more is contained within a range from 0.06 to 25 µg/0.015 cm³, and a low boiling point solvent having a boiling point of 80°C or less is contained within a range from 0.03 to 20 µg/0.015 cm³ as the solvent (S). The amounts of these residual solvents are preferably as small as possible.

Further, since the polycarbonate film with a hard-coating layer of the present invention is used, a denatured layer in which the polycarbonate is denatured by the solvent (S) is seen in a surface layer portion of the polycarbonate on the side which is in contact with the hard-coating layer in the polycarbonate molded article with a hard-coating layer obtained by injection molding.

### EXAMPLES

Hereafter, the present invention will be more specifically described by raising examples; however, the present invention is not limited to these examples.

### [Example 1]

As a support, a polycarbonate film having a width of 100 mm and a thickness of 300 µm was prepared. Since the surface of the polycarbonate film is liable to be harmed, a polyethylene sheet having a thickness of 20 µm had been stuck as a scuff-preventing protective sheet on the side where the hard-coating layer is not applied.

The following starting materials (1) to (4) were mixed to prepare a hard-coating application liquid.

### (composition of hard-coating liquid)

| | |
|---|---|
| (1) polystyryl methacrylate (Mw = about 13,000) | 20 parts by weight |
| (2) pentaerythritol triacrylate | 30 parts by weight |
| (3) photopolymerization initiator (Irgacure IRG184) | 3 parts by weight |
| (4) diluting solvent (MEK / toluene = 50 / 50) | 50 parts by weight |

The aforesaid hard-coating application liquid was applied with a slit die coater so that the thickness would be 3 µm after drying and curing, and was dried at a drying temperature of 80°C for 1 minute. On this application surface, ultraviolet rays were irradiated at 500 mJ/cm² with a high pressure mercury-vapor lamp for curing to form a hard-coating layer. This was wound in a roll form. Thus, a polycarbonate film with a hard-coating layer was obtained.

### (Evaluation of hard-coating layer)

### 1. Evaluation of hardness of hard-coating layer

An abrasion test (load of 500g, 500 revolutions) was carried out on the obtained film with a hard-coating layer by means of a Taber type abrasion tester. The hazes before and after the abrasion test were measured with a haze meter (TC-H3, DPK type: manufactured by Tokyo Denshoku) to determine a haze difference (ΔH) before and after the abrasion test. If this haze difference (ΔH) is 16% or less, it is judged as having an excellent hardness.

### 2. Evaluation of adhesive properties

The obtained film with a hard-coating layer was left to stand in a high-temperature high-humidity tank of 80°C-80% for 1000 hours, and then a peeling test by cross-cutting was carried out to confirm the presence or absence of peeling.

In other words, linear cuts were made with longitudinal and lateral intervals each of 1 mm on the hard-coating layer surface to form 100 checkerboard squares, a cellophane adhesive tape was stuck thereon, and it was left to stand for 30 minutes while a load of 1 kg/cm² is being given. After leaving it to stand, the cellophane adhesive tape was peeled off to examine the presence or absence of the peeled checkerboard squares . The peeling was judged to be present if one or more squares were peeled.

### [Examples 2 to 6, Comparative Examples 1 to 7]

A polycarbonate film with a hard-coating layer was obtained in the same manner as in Example 1 except that the diluting solvent was replaced with those shown in Table 2 in Example 1. Evaluations similar to those of Example 1 were carried out.

**Table 2**

| | Diluting solvent | Evaluation of hardness ΔH(%) | Evaluation of adhesive properties 80°C-80% |
|---|---|---|---|
| Example 1 | MEK/toluene = 50/50 | 15.5 | 1000 hr absence of peeling |
| Example 2 | MEK/toluene = 66/34 | 12.3 | 1000 hr absence of peeling |
| Example 3 | MEK/toluene = 90/10 | 10.5 | 1000 hr absence of peeling |
| Example 4 | ethyl acetate/toluene = 66/34 | 14.3 | 1000 hr absence of peeling |
| Example 5 | MEK/toluene/IPA = 70/20/10 | 11.3 | 1000 hr absence of peeling |
| Example 6 | MEK/toluene/IPA = 35/35/30 | 13.2 | 1000 hr absence of peeling |
| Comparative Example 1 | toluene = 100 | 20.3 | 1000 hr absence of peeling |
| Comparative Example 2 | MEK/toluene = 34/66 | 19.0 | 1000 hr absence of peeling |
| Comparative Example 3 | MEK/toluene = 95/5 | 10.2 | 1000 hr presence of peeling |
| Comparative Example 4 | MEK = 100 | 9.8 | 1000 hr presence of peeling |
| Comparative Example 5 | toluene/IPA = 66/34 | 15.3 | 750 hr presence of peeling |
| Comparative Example 6 | toluene/cyclohexanone = 66/34 | 17.1 | 750 hr presence of peeling |
| Comparative Example 7 | toluene/IPA = 34/66 | 13.8 | 500 hr presence of peeling |

From Table 2, those of Examples 1 to 6 were all excellent in surface hardness and were also excellent in adhesive properties under a high-temperature high-humidity condition. On the other hand, those of Comparative Examples 1 and 2 were inferior in surface hardness though excellent in adhesive properties. Those of Comparative Examples 3 and 4 were inferior in adhesive properties though excellent in surface hardness. Those of Comparative Examples 5, 6, and 7 were considerably inferior in adhesive properties, since the solvent that corrodes the polycarbonate was less than 70 wt%.

Next, with respect to the polycarbonate film with a hard-coating layer of Example 2, the amount of residual solvent in the hard-coating layer was measured, with the result that MEK was 2.1 µg/0.015 cm³, and toluene was 5.4 µg/0.015 cm³.

The measurement of the residual solvent was carried out by means of head-space gas chromatography. Apparatus: HSS-2B, gas chromatograph GC-14B manufactured by Shimadzu Corporation.
Heating and measuring condition of sample: The sample was put into a 25-ml vial bottle so that the volume of the hard-coating layer would be 0.015 cm³, and was heated at 120°C for one hour. The solvent gasified by heating was sampled in an amount of 0.4 ml, and the sample was measured with the use of PEG-20M as a column. A calibration curve was prepared from a sample containing known amounts of MEK and toluene separately heated and gasified under the same condition.

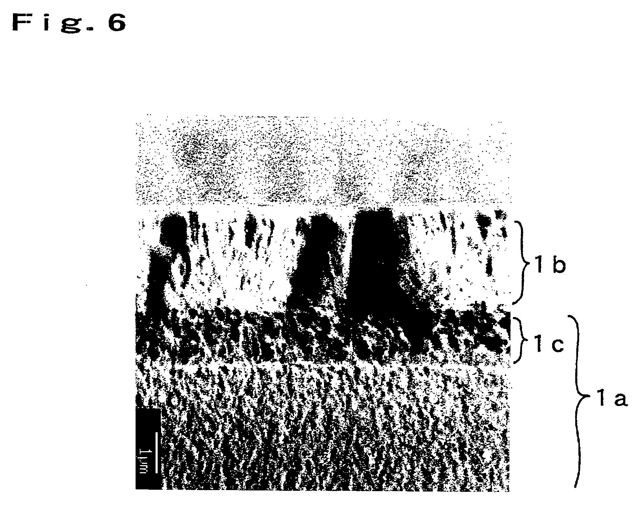

Further, with respect to the polycarbonate film with a hard-coating layer of Example 2, its cross section was observed by an electron microscope. The electron microscope photograph (x 10,000 fold) is shown in Fig. 6. As shown in Fig. 6, a denatured layer (1c) in which the polycarbonate was denatured by the solvent (MEK / toluene) used at the time of forming the hard-coating layer was observed on a surface layer portion of the polycarbonate film (1a) on the side which is in contact with the hard-coating layer (1b). The thickness of the hard-coating layer (1b) was about 2.3 µm, and the thickness of the denatured layer (1c) was about 1.2 µm.

### [Example 7: production of injection-molded article]

The polycarbonate film with a hard-coating layer of Example 2 was cut into a size of 10 cm x 20 cm. With reference to Fig. 2, this film was mounted on molds (3) (4) for injection molding and clamped so that the hard-coating layer (1b) faces upwards. Next, injection molding was carried out with a molten polycarbonate resin temperature of 315°C, a mold temperature of 80°C, and a molding time of 1 minute including the molten polycarbonate resin filling time and the cooling time, thereby to form a molded article substrate to which a hard-coating layer is given on one surface.

With respect to the obtained molded article substrate, the amount of residual solvent in the hard-coating layer was measured, with the result that MEK was 0.55 µg/0.015 cm³ and toluene was 4.0 µg/0.015 cm³.

With respect to the obtained molded article substrate, a cross section near the hard-coating layer was observed by an electron microscope, with the result that a denatured layer of polycarbonate was observed in the same manner as in Fig. 6.

The present invention can be carried out in various other modes without departing from the spirit or essential characteristics thereof. Therefore, the above-described examples are merely illustrative in all respects, and must not be construed as being restrictive. Further, the changes that fall within the equivalents of the claims are all within the scope of the present invention.

### INDUSTRIAL APPLICABILITY

According to the present invention, a hard-coating material composition for a polycarbonate substrate is provided which is excellent in surface hardness and scuff resistance and which is also excellent in adhesive properties to the substrate by using a solvent having a specific composition that corrodes the polycarbonate. In particular, this hard-coating material composition is suitable for forming continuously a hard-coating layer on a polycarbonate film. By means of the polycarbonate film with a hard-coating layer of the present invention, compatibility between the surface hardness and the adhesive properties to the substrate, which had been difficult in the prior art, could be achieved. By using the polycarbonate film with a hard-coating layer of the present invention, a polycarbonate molded article with a hard-coating layer can be produced by injection molding.

## Claims

1. A hard-coating material composition for a polycarbonate substrate which composition comprises a hard-coating material and an organic solvent, wherein the organic solvent comprises 70 wt% or more of a solvent (S) that corrodes the polycarbonate at 25°C in the total organic solvent, and
the solvent (S) that corrodes the polycarbonate comprises from 10 to 50 wt% of a high boiling point solvent having a boiling point of 100°C or more and from 50 to 90 wt% of a low boiling point solvent having a boiling point of 80°C or less with respect to the solvent (S).

2. The hard-coating material composition for a polycarbonate substrate according to claim 1, wherein the boiling point of the high boiling point solvent is 100°C or more and 130°C or less.

3. The hard-coating material composition for a polycarbonate substrate according to claim 1, wherein the high boiling point solvent is toluene, and the low boiling point solvent is ethyl acetate and/or methyl ethyl ketone.

4. The hard-coating material composition for a polycarbonate substrate according to claim 1, wherein the hard-coating material is an ultraviolet-curable acrylic type radical-polymerizing hard-coating material.

5. The hard-coating material composition for a polycarbonate substrate according to claim 1, wherein the polycarbonate substrate is a polycarbonate film.

6. The hard-coating material composition for a polycarbonate substrate according to claim 1, wherein the polycarbonate substrate is a polycarbonate film having a thickness of from 100 µm to 500 µm.

7. The hard-coating material composition according to claim 1, for forming continuously a hard-coating layer on a long polycarbonate film.

8. A method for producing a polycarbonate film with a hard-coating layer, the method comprising the steps of;
applying continuously a hard-coating material composition according to any one of claims 1 to 7 on a long polycarbonate film,
drying within a temperature range of from 50 to 120°C for 10 seconds to five minutes, thereafter
irradiating ultraviolet rays for curing to form the hard-coating layer, and
winding the obtained film in a roll form.

9. A method for producing a polycarbonate film with a hard-coating layer, the method comprising the step of applying continuously a hard-coating material composition according to any one of claims 1 to 7 on a long polycarbonate film by means of a slit die coater.

10. A polycarbonate film with a hard-coating layer, the polycarbonate film having the hard-coating layer on at least one surface thereof, wherein the hard-coating layer contains a solvent (S) that corrodes the polycarbonate at 25°C, and the content of the solvent is within a range from 0.3 to 60 µg/0.015 cm³ in the hard-coating layer.

11. The polycarbonate film with a hard-coating layer according to claim 10, wherein the hard-coating layer contains a high boiling point solvent having a boiling point of 100°C or more within a range from 0.2 to 50 µg/0.015 cm³ and a low boiling point solvent having a boiling point of 80°C or less within a range from 0.1 to 30 µg/0.015 cm³ as the solvent (S).

12. A polycarbonate film with a hard-coating layer, the polycarbonate film having the hard-coating layer on at least one surface thereof, wherein a denatured layer comprising the polycarbonate denatured by a solvent (S) which is used at the time of forming the hard-coating layer and which corrodes the polycarbonate at 25°C, is formed in a surface layer portion of the polycarbonate film on the side that is in contact with the hard-coating layer.

13. A polycarbonate molded article with a hard-coating layer, the polycarbonate molded article having the hard-coating layer on at least one surface of the molded article, wherein the hard-coating layer contains a solvent (S) that corrodes the polycarbonate at 25°C, and the content of the solvent is within a range from 0.1 to 35 µg/0.015 cm³ in the hard-coating layer.

14. The polycarbonate molded article with a hard-coating layer according to claim 13, wherein the hard-coating layer contains a high boiling point solvent having a boiling point of 100°C or more within a range from 0.06 to 25 µg/0.015 cm³ and a low boiling point solvent having a boiling point of 80°C or less within a range from 0.03 to 20 µg/0.015 cm³ as the solvent (S).

15. A polycarbonate molded article with a hard-coating layer, the polycarbonate molded article having the hard-coating layer on at least one surface of the molded article, wherein a denatured layer comprising the polycarbonate denatured by a solvent (S) which is used at the time of forming the hard-coating layer and which corrodes the polycarbonate at 25°C, is formed in a surface layer portion of the polycarbonate on the side that is in contact with the hard-coating layer.
